# EUROPÄISCHE PATENTANMELDUNG

(11) **EP 1 136 574 A1**
(43) Veröffentlichungstag der Anmeldung: **26.09.2001**
(21) Anmeldenummer: 00810237.8
(22) Anmeldetag: 21.03.2000
(51) Int. Cl.: C21D 9/38, B21B 27/00

(54) **Herstellung eines Prägwerkzeugs und dessen Anwendung**

(71) Anmelder: SM Schweizerische Munitionsunternehmung AG, 3602 Thun (CH)
(72) Erfinder: Steinhoff, Kurt Dr.-Ing., 6463 Bürglen (CH); Schuleit, Natalie Dr.-Ing., 6207 Nottwil (CH)
(74) Vertreter: Frauenknecht, Alois J.

(57) **Zusammenfassung**

Bei Umformprozessen aber auch in Lagerstellen stellt sich das Problem der Verdrängung des Schmiermittels durch dynamische und statische Vorgänge. Mittels gezielt thermisch in der Oberfläche eines Werkzeugs (1) eingebrachter kraterförmiger Vertiefungen (2) lassen sich deterministisch angeordnete Schmiermitteltaschen mit Randabschlüssen (9) bilden. Durch Abprägen der Werkzeugoberfläche auf dem Werkstück (1) entstehen tribologisch günstige Schmiermitteltaschen, welche den Verschleiss bei nachfolgenden Umformungen reduzieren und dadurch die Standzeit der Werkzeuge erhöhen. Ebenfalls günstig ist eine derart erzielte Textur für die Verankerung nachfolgender Beschichtungen.

## Beschreibung

Die vorliegende Erfindung bezieht sich auf ein Verfahren nach Patentanspruch 1 und auf eine Schmiertasche nach Anspruch 6 sowie auf eine bevorzugte Anwendung des Verfahrens nach Anspruch 10.

Ein Verfahren gemäss dem Oberbegriff des Anspruchs 1 wurde in der PCT/CH99/00451 vorgeschlagen und hat zum Zweck Werkstückoberflächen unterschiedlicher physikalischer/technischer und/oder chemischer Eigenschaften zu bilden und den Verschleiss an hochbeanspruchten Oberflächen zu reduzieren. Dadurch lassen sich auch die tribologischen Eigenschaften der Oberflächen günstig beeinflussen.

Verfahren zur Herstellung definierter Mikrostrukturen auf Werkzeugoberflächen und auf Werkstücken sind seit einigen Jahren bekannt (u.a. DE -A1- 195 29 429) und finden insbesondere in Umformprozessen Verwendung. Dabei wird während der plastischen Umformung eine Abprägung der Textur (Mikrogeometrie) der Werkzeugoberfläche auf der Werkstückoberfläche erreicht; diese Abprägung wirkt sich in Bezug auf die Standzeit der Werkzeuge in Folgeprozessen günstig aus. Eine Analyse der Funktionen einer gezielt mit Mikrostrukturen versehenen Oberfläche ergibt folgendes:
1. Verbesserung der tribologischen Bedingungen für nachfolgende Formgebungen.
2. Verbesserung der tribologischen Bedingungen in Baugruppen und Systemen wie beispielsweise Gleitlager.
3. Verbesserung der Haftung und des ästhetischen Erscheinungsbildes nach einer Lackierung (Karosserien).
4. Vereinfachung und Verbesserung von Beschichtungsverfahren, insbesondere Verbesserung der Schichthaftung von Grundierungen und Plattierungen.

Eine mittelbare Strukturierung von Werkstückoberflächen empfiehlt sich vor allem bei hohen Stückzahlen; die notwendige, definierte Struktur im Werkstück setzt in der Regel mehrere Formgebungsschritte voraus, wobei die für jeden Folgeschritt tribologisch geeignete Oberflächenstruktur vorzusehen ist.

Bekannt sind derartige Verfahren in der Feinblechherstellung, beim Tiefziehen u.a. auch beim reduzierenden Kaltwalzen mit nachfolgendem Nachwalzen. Es hat sich gezeigt, dass sich Strukturen nachteilig auswirken, bei denen die gebildeten Schmiertaschen durch Abprägen eines durch Volumenverlagerung entstandenen erhabenen Strukturanteils entstanden sind. Durch die zwangsläufige Verknüpfung eines erhabenen Strukturanteils mit einer Vertiefung resultiert zwingend eine tribologisch ungünstige Materialumlagerung, die in einer Nachbearbeitung, meist durch einen Schleifvorgang, abgetragen wird. Damit verliert eine solche Schmiertasche ihre Verschleissfestigkeit und ihren Randabschluss. Es können somit nur sehr beschränkt Schmiermittelreserven gebildet werden, die zudem durch dynamischen Vorgänge während des Formgebungsprozesses entweder ausgespült und/oder durch Wegquetschen des Schmierstoffes aus den Zonen höchster Kontaktspannungen entfernt werden.

Es ist daher Aufgabe der vorliegenden Erfindung Verfahren zur Erzeugung einer verbesserten, optimierten Schmiertaschengeometrie zu schaffen, welche folgende Eigenschaften aufweist:
1. Die Mikrostruktur der Werkzeugoberfläche insbesondere deren erhabene Strukturanteile sollen eine hohe Verschleissfestigkeit aufweisen.
2. Die Gestaltung von erhabenen und vertieften Strukturbereichen soll in einer nicht nachteiligen Verknüpfung vorliegen und somit weitgehend frei gestaltbar sein.
3. Der Abschluss der Schmiertasche als Voraussetzung für einen hydrostatischen Druckaufbau soll in einer möglichst frühen Prozessphase erfolgen und gleichzeitig eine Versorgung mit Schmiermitteln während des gesamten Prozessablaufs sicherstellen. Ebenfalls sollen sich die Randwinkel der Schmiertaschen günstig auf das Herausfliessen des Schmierstoffs einstellen lassen.

Diese Aufgabe lässt sich durch ein Prägewerkzeug das nach dem Verfahren nach den Merkmalen des Anspruchs 1 hergestellt wurde lösen; die resultierenden Schmiertaschen erfüllen die Merkmale von Anspruch 6.

Der im Patentanspruch 1 erwähnte Eintrag von Karbidpartikeln kann gemäss PCT/CH99/00451 durch eine vor der thermischen Behandlung auf die Werkzeugoberfläche aufgetragene Schlicke, durch mit Karbidpulver belegte Klebstreifen oder durch Karbidpartikel welche in die Schmelze eingetragen werden, erfolgen. Letzteres wird bei der Beschichtung von Metalloberflächen sowie ähnlichen Technologien häufig angewendet und gilt als an sich bekannte, übliche Methode.

Die Menge des Eintrags an Karbidpartikel wird empirisch bestimmt und hat die durch Sublimierverdampfen, Erstarrungsschrumpfen und durch die Plasma-Schockwelle entstehenden Materialverluste in der Werkzeugoberfläche zu kompensieren, d.h. das Niveau der Werkzeugoberfläche - dessen Topographie - soll nach dem lokalen Aufschmelzen möglichst unverändert, zumindest aber reproduzierbar sein und nur im Mikrobereich variieren.

In der zentralen Karbide enthaltenden Zone treten diese in Form von dispergierten Partikeln aber auch als Legierungsbestandteile in Metallkarbiden auf, welche sich während des lokalen Aufschmelzens und Abkühlens bilden.

Charakteristisch für eine mit einem erfindungsgemässen Prägewerkzeug hergestellte Textur ist das Vorhandensein eines vertikal orientierten "Abschlussrings" in der Werkstückoberfläche. Dieser bewirkt eine mechanische Abgrenzung, d.h. eine geschlossene Schmiertasche während der ersten Kontaktphase mit dem, beispielsweise formgebenden Werkzeug.- Dadurch kann ein hydrodynamischer Druckaufbau erfolgen, was die Schmierstoffversorgung aktiviert, selbst dann, wenn noch keine eigentlichen Formschlüsse zwischen Werkzeug und Werkstück erfolgt sind. Aufgrund der resultierenden geringen Kontaktflächen bildet sich ein Leervolumen über der die Schmiertaschen umgebenden Oberfläche, über welches Schmierstoff in die Kontaktzonen hoher Belastung geführt wird.- Dies bewirkt einen, gegenüber einer auf reiner Oberflächenbenetzung beruhenden Schmierung, beträchtlich verstärkten hydrodynamischen Schmierfilm hoher Tragfähigkeit.

Bei einer fortschreitenden Einebnung der Oberfläche ist das "Wegquetschen" von Schmierstoff unvermeidlich, was sich aber durch eine Vergrösserung (Überdimensionierung) des Schmiertaschenvolumens soweit kompensieren lässt, dass beispielsweise der Formgebungsprozess auch nach langer Standzeit, noch ohne grösseren Verschleiss, durchführbar ist.

Aufgrund der bisher üblichen Voraussetzung einer annähernden Volumenkonstanz bei den konventionellen Herstellungsverfahren für Schmiertaschen sind bei erfindungsgemäss hergestellten Werkzeugoberflächen geänderte (kleinere) Spiele zwischen den Werkzeugen möglich, d.h. es können auch beim Texturieren von Oberflächen engere Masstoleranzen eingehalten werden.

Durch das im Patentanspruch erwähnte lokale thermische Umschmelzen der Werkzeugoberfläche wird eine derart hohe Energie in den Werkstoff (Substrat) eingebracht, dass eine Sublimierverdampfung stattfindet und somit nahezu keine Werkstoffumlagerung erfolgt.- Der gewünschte Randabschluss der Krater ist mehrheitlich mit Metallkarbiden und Legierungsbestandteilen aufgebaut und besitzt eine entsprechend hohe Verschleissfestigkeit, die sich zudem durch die vorbestimmbare Menge an eingetragenem Karbidpulver steuern lässt.

Der Patentanspruch 1 beschreibt das besonders einfach und auf zahlreichen bekannten Anlagen realisierbare Aufschmelzen einer mit Karbidpartikeln belegten Oberfläche.

Überraschenderweise stellt sich nach einem notorisch bekannten, spanlosen Abtragungsvorgang auf der Werkzeugoberfläche - am Ort der Wärmebehandlung - eine Struktur ein, welche hervorragend zur Abprägung geeignet ist und ideale Schmiertaschen in der Werkstückoberfläche erzeugt.

Die erfindungsgemässe Schmiertasche zeichnet sich durch ihre relativ voluminöse kraterförmige Vertiefung und einen umlaufenden Randabschluss geringer Höhe aus.

In abhängigen Ansprüchen sind bevorzugte Weiterbildungen des Erfindungsgegenstands charakterisiert.

Besonders wirtschaftlich und rationell ist der verfahrensgemässe Einsatz eines gepulsten Nd:YAG-Lasers.

Grundsätzlich lässt sich mittels notorisch bekannter, gekühlter Fokusierlinsen der Brennfleck des Laserstrahls in weiten Grenzen einstellen, so dass auch bei gleicher Strahlleistung kraterförmige Vertiefungen beliebiger Grösse und Randwinkel erzielbar sind.

Eine sehr einfache und wirtschaftliche Festlegung, und Verfeinerung der erhabenen Teile der Oberfläche, insbesondere deren Abrundung und Glättung erfolgt mittels einer Strahlbearbeitung. Dabei werden gleichzeitig lose oder schlecht haftende Karbid- und/oder Legierungsbestandteile entfernt.

Anlagetechnisch günstig sind mechanische Strahlbearbeitungen, da die entsprechenden Geräte relativ klein sind und sich leicht in den Herstellungsprozess integrieren lassen. Denkbar ist aber auch der Einsatz von anderen Strahlungsquellen sowie von unter hohem Druck beaufschlagten Fluids, aber auch ein Bürsten und damit ein Abschleifen von Zonen geringerer Härte.

Gleichzeitig lässt sich durch die Strahlbearbeitung der Verschleissgradient am Werkstück und damit dieser auch zwischen dem Werkzeug und dem Werkstück einstellen, in dem die Karbidschicht auf das gewünschte Mass reduziert wird.

Je nach Werkzeuggrösse und vorhanden anlagetechnischen Möglichkeiten kann auch eine chemische Abtragung vorteilhaft sein. Selbstverständlich muss das gewählte Abtragungsverfahren an die Härte des Substrats, d.h. der Werkzeugoberfläche angepasst sein, damit sich deren Masse und Oberflächenbeschaffenheit nicht nachteilig verändern; in Frage kommen auch mehrstufige Abtragungsverfahren.

Die ursprüngliche Karbidschicht - vor dem thermischen Aufschmelzen - lässt sich besonders einfach in Form einer Schlicke auf die gewünschten Stellen auf der Werkzeugoberfläche aufbringen; ebenfalls bewährt haben sich mit Karbidpulver beschichtete Klebestreifen.

Die eigentliche Ausgestaltung der Schmiertaschen kann in weiten Grenzen variiert werden, was eine Anpassung an die Werkzeuggeometrie, die örtliche Belastung und an das zum Einsatz gelangende Schmiermittel sowie den präsumtiv resultierenden Abrieb erlaubt. Die Form der Schmiertaschen ist nicht auf rotationssymmetrische Krater beschränkt, es können auch längliche Krater gebildet werden, wenn dies tribologisch sinnvoll erscheint. Wichtig sind in jedem Fall Randabschlüsse, welche eine Steigung aufweisen, die aufgrund der üblicherweise relativ hohen Kohäsion von Schmiermitteln verhindern dass diese aus dem Krater gezogen oder gepresst werden.- Aus diesen Kriterien ergeben sich die beanspruchten, bevorzugten Abmessungen die individuell optimierbar sind.

Bevorzugte Steigungwinkel für die Randabschlüsse sind in weiteren abhängigen Ansprüchen aufgezeigt, wobei auf flüssige Schmierstoffe mittlerer Viskosität abgestellt ist.

Verfahrensgemäss hergestellte Prägewalzen (= Werkzeuge) für die Feinblechherstellung bilden zusammen mit dem zu walzenden Blech (= Werkstück) bereits während des Walzvorgangs Schmiertaschen, die sich günstig auf den Verschleiss der Prägewalze auswirken. In nachfolgenden Umformprozessen gewährleisten die im Blech abgeprägten Schmiertaschen höhere Standzeiten der meist sehr kostspieligen Werkzeugformen. Wenn die erzielte Textur regelmässig auf der Blechoberfläche verteilt wird, dient sie gleichzeitig als idealer Haftgrund für spätere Beschichtungen, was besonders im Karosseriebau erwünscht ist.

Nachfolgend werden anhand von Zeichnungen Ausführungsbeispiele des Erfindungsgegenstands näher erläutert. Es zeigen:
- Fig. 1: eine schematische Schnittdarstellung, welche die Karbidschicht nach der thermischen Bearbeitung der Werkzeugoberfläche aufzeigt, wobei der zur Bearbeitung benutzte Laser und der Strahlwinkel angedeutet sind,
- Fig. 2: eine charakteristische Form eines einzelnen, durch Abprägen mit einem verfahrensgemäss hergestellten Werkzeug erzeugten Kraters, mit eingetragener Vermassung,
- Fig. 3: in Funktion des Radius r feststellbare Zonen, die durch die thermische Bearbeitung entstanden sind, in normierter, vergrösserter Darstellung,
- Fig. 4: die Zonen nach Fig. 2 in einer Draufsicht auf den Krater,
- Fig. 5: eine mögliche deterministische Anordnung der thermisch implantierten Arbeitspunkte nach Fig. 1 bis 3, in einer vereinfachten, ausschnittweisen Vergrösserung auf einer Werkzeugoberfläche ,
- Fig. 6a: ine in Abszisse-Richtung interferometrisch vermessene, reale Werkzeugoberflächenstruktur,
- Fig. 6b: die Abprägung der Oberflächenstruktur Fig. 6a im Werkstück,
- Fig. 7a: eine in Ordinate-Richtung interferometrisch vermessene, reale Werkzeugoberflächenstruktur und
- Fig. 7b: die Abprägung der Oberflächenstruktur Fig. 6a im Werkstück.

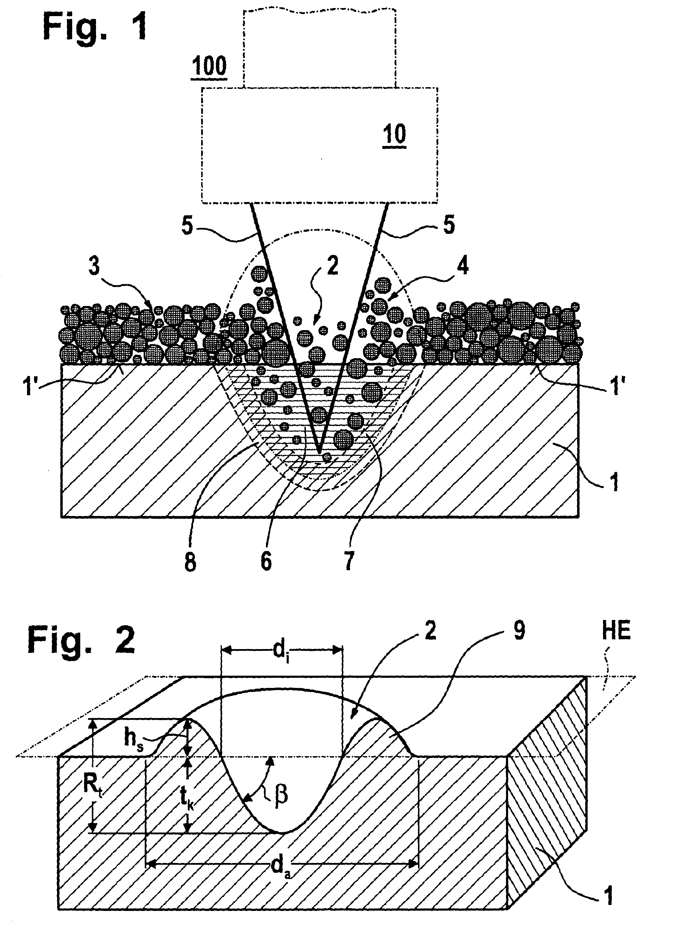

In Figur 1 ist mit 1 ein Querschnitt durch ein Teil eines Werkzeugs bezeichnet. Die Oberfläche 1' des Werkzeugs 1 ist Substrat für eine Beschichtung mit Karbidpulver 3, welches mit einem organischen Bindemittel versehen aufgetragen wurde. Das Werkzeug selbst besteht aus einem handelsüblichen Kaltarbeitsstahl 1.2601 (Norm DIN 17350).

Darüber befindet sich eine handelsübliche Impulslaser-Anlage (Nd:YAG-Laser) 100 mit einer Fokusierlinse 10; der austretenden Laserstrahl ist mit 5 bezeichnet und dispergiert die Karbide 3 in einer Implantier-Zone 6. Durch die hohe punktuell auftreffende Energie sublimiert ein Teil des Stahls 1 und legiert bzw. wird in einer Randzone 7 umgeschmolzen. Es verbleibt ein Krater 2, der mit dispergierten und legierten Karbiden 4 ausgefüllt ist. Der Übergang zwischen der Randzone 7 zum Substrat des Werkzeugs 1 ist mit 8 bezeichnet und betrifft eine Festphase, in welcher lediglich eine Gefügeumwandlung statt gefunden hat.

Wird nun eine solcher Art vorbereitete Werkzeugoberfläche 1' einem Abtragungsvorgang beispielsweise durch Sandstrahlen unterzogen, so verbleiben die harten, Karbide enthaltenden Schichten nahezu unverändert, während die weicheren Umschmelzonen abgetragen werden und ringförmige Ausnehmungen bilden. Durch Abprägen einer solchen Topographie lassen sich Schmiertaschen bilden.

Die vereinfacht dargestellte Form einer derart hergestellten idealen Schmiertasche ist in Fig. 2 zu sehen, wobei hier der ringförmige Randabschluss mit 9 bezeichnet ist. Ebenfalls eingetragen ist eine Hauptebene HE, welche identisch mit der Werkzeugoberfläche im Bereich des Kraters ist.

Ferner sind der äussere Ringdurchmesser mit dₐ, der innere Ringdurchmesser dᵢ die maximale Vertiefung des Kraters gegenüber der Hauptebene HE mit t_{K} und die Überhöhung gegenüber dieser mit hₛ eingezeichnet. Das Gesamtmass beträgt Rₜ; der die Flankensteigung im Krater 2 charakterisierende Tangentialwinkel ist β und beträgt in der Regel 15° bis 45°.

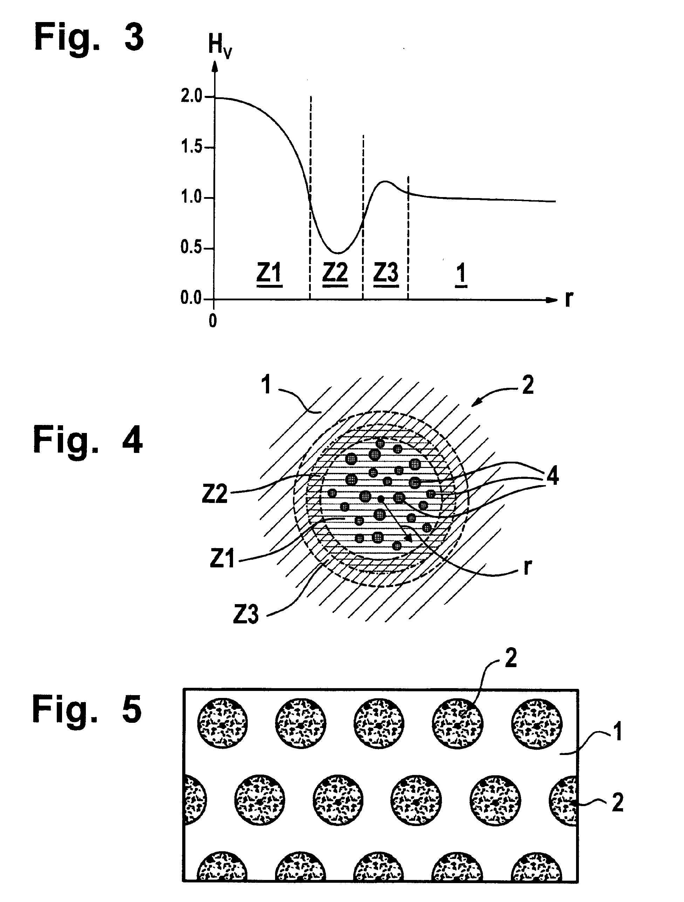

Eine Untersuchung der gemäss Fig. 1 erfolgten Aufschmelzung zeigt den nach Fig. 3 typischen Schichtaufbau, nach erfolgter mechanischer Abtragung:

Vom Zentrum des Kraters 2 in radialer Richtung r, siehe Fig. 4, trifft man auf die erste Schicht Z1, die dispergierte/legierte Schicht welche durch die thermisch erfolgte Flüssigphasenbearbeitung entstand. Danach folgt eine etwas dünnere Schicht, eine Umschmelzone Z2, die zwar ebenfalls umgeschmolzen wurde, aber karbidfrei ist. Die nächste Schicht ist eine Umwandlungszone Z3, welche in der Festphase durch Wärmeeinwirkung gebildet ist. Aussen befindet sich das Substrat, der Werkzeugstahl 1.

Die relative Härte ist in der Ordinate mit Hᵥ bezeichnet.

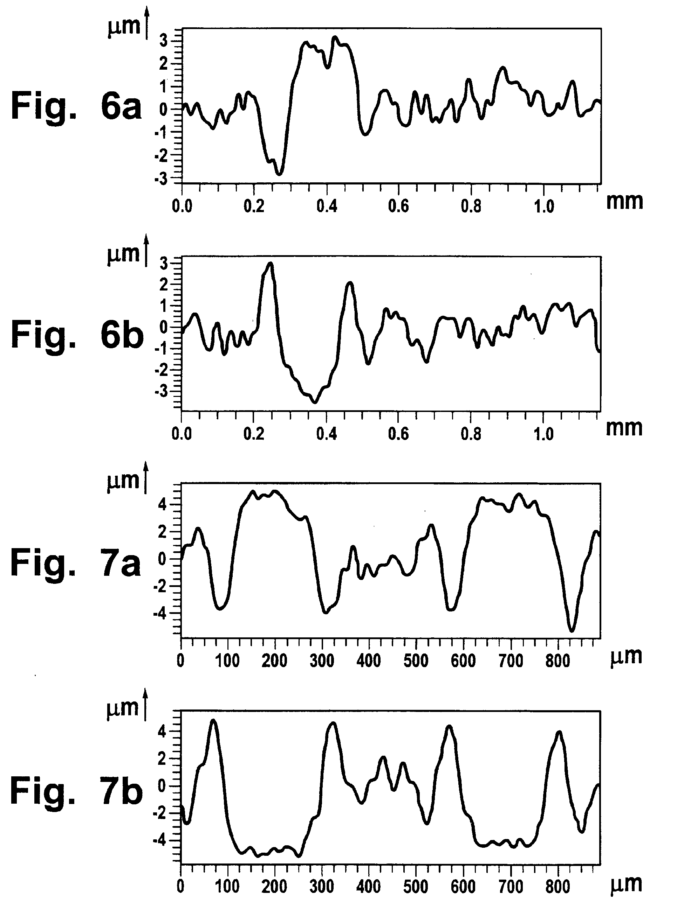

Eine mit gleichmässigem Raster erfindungsgemäss erstellte Werkzeugoberfläche ist in Fig. 5 dargestellt. Je nach örtlicher Belastung werden die Abstände zwischen den einzelnen Kratern 2 variiert, doch erfolgt dies aus praktischen Gründen linienweise (in Kolonnen).

Am realisierten Werkzeug wurden folgende beispielsweisen charakteristischen Daten durch eine interferometrische Oberflächenmessung gewonnen:
Max. Durchmesser dₐ des Randabschlusses 9 = 300 µm
Innendurchmesser dᵢ am Randabschluss 9 = 230 µm
Tangentialwinkel (Flankensteigungswinkel) β = 10°
Maximale Vertiefung t_{K} = 6 µm
Maximale Überhöhung hₛ = 4µm
Fülltiefe Schmiermittel Rₜ = 10 µm

Es wurden folgende Laserparameter angewendet:
Pulsenergie (Spotenergie) = 1 Joule
Pulsfrequenz = 10 Hz
Pulsleistung = 400 W
Leistungsdichte = 1,4 x 10⁵ W/cm²

Eine Werkzeugoberfläche mit den obigen Daten weist ein interferometrisches Profil in Abszisse-Richtung gemäss Fig. 6a auf.

Besonders bewährt hat sich für den Abtragungsvorgang ein Glasstrahlen mit handelsüblichen, kugelförmigen Glasperlen von 25 - 50 µm Durchmesser unter einem Druck von 4,0 bar.

Ebenfalls geeignet ist hierfür ein Ätzmittel unter der Bezeichnung "V3A Beize", welches aus 100 Teilen destilliertem Wasser, 100 Teilen Salzsäure (37 %), 10 Teilen Salpetersäure (65 %) und 0,3 Teilen handelsüblicher "Sparbeize" (Dr. Vogels Sparbeize, Nr. 1830/170014, Wirtz-Buehler GmbH, D-40599 Düsseldorf) besteht.

Die mit einem Druck von 25 bar erzeugte Abprägung in einem Aluminiumwerkstück (99,5 % Al) zeigt das zu Fig. 6a inverse Profil gemäss Fig. 6b.

Analog sind die Aufzeichnungen in Ordinate-Richtung Fig. 7a und Fig. 7b, welche wiederum das gute Abprägeverhalten zeigen und das System nicht nur wegen seiner tribologischen Vorteile, sondern auch wegen der idealen Texturierung des Werkstücks für nachfolgende Beschichtungen (Karosseriebleche etc.) empfehlen.

Die anhand eines Werkzeugs und eines zu bearbeitenden Werkstücks geführten Betrachtungen lassen sich selbstverständlich auch auf Gleitflächen übertragen, bei denen in einer - oder bei kürzeren Gleitwegen - wechselseitig in beiden Gleitflächen erfindungsgemässe Schmiertasche an Orten hoher Belastung vorgesehen sind.

Aus wirtschaftlichen Überlegungen ist das Verfahren auf handelsübliche Karbide bezogen; es lassen sich aber auch andere Werkstoffe implantieren bzw. erfindungsgemäss zulegieren.

### Bezeichnungsliste

- 1: Werkzeug (Substrat); Kaltarbeitsstahl
- 1': Werkzeugoberfläche
- 2: Krater / Vertiefung
- 3: Karbidpulver
- 4: dispergierte Metallkarbide
- 5: Laserstrahl (fokusiert)
- 6: (Karbid-) implantierte Zone
- 7: Umschmelzone
- 8: Festphase mit Gefügeumwandlung
- 9: Randabschluss
- 10: Fokusierlinse (gekühlt)
- 100: Impulslaser-Anlage (Nd:YAG-Laser)
- HE: Werkstückoberfläche (Hauptebene)
- dₐ: max. Durchmesser Randabschluss
- dᵢ: innerer Durchmesser Randabschluss
- t_{K}: max. Vertiefung
- hs: Überhöhung
- Hᵥ: relative Härte
- β: Tangentialwinkel (Flankensteigung)
- r: Radius (Krater)
- Rₜ: Fülltiefe Schmiermittel
- Z1: dispergierte/legierte Schicht
- Z2: Umschmelzone
- Z3: Umwandlungszone

## Patentansprüche

1. Verfahren zur Herstellung eines Prägewerkzeuges für die Texturierung von Werkstücken durch eine gezielte partielle Änderung der physikalisch/technischen Eigenschaften, wobei durch lokales thermisches Aufschmelzen auf der Werkzeugoberfläche bogenförmig begrenzte, deterministische Mikrostrukturen des mit einer Textur zu versehenden Werkstücks in einem den vorgesehenen tribologischen Bedingungen angepassten Raster, in definierten geometrischen Abständen der Raster zueinander, angebracht werden, wobei während des Aufschmelzens Karbidpartikel in die Mikrostrukturen eingetragen werden, **dadurch gekennzeichnet, dass** durch das thermische Aufschmelzen der Werkzeugoberfläche (1') eine zentrale, Karbide enthaltende Zone (Z1) hoher Härte erzeugt wird, dass gleichzeitig eine zum zentralen Bereich (Z1) mantelförmige oder koaxial verlaufende Umschmelzone (Z2) mit gegenüber dem zentralen Bereich geringerer Härte und eine weitere, die Umschmelzone (Z2) umgebende äussere Umwandlungszone (Z3) gebildet werden, welche eine gegenüber der Umschschmelzzone (Z2) und der Werkzeugoberfläche (1') niedrigere Härte aufweist, wobei die zugeführte thermische Energie derart eingestellt wird, dass die Topographie des Werkzeugs im Mikrobereich wenigstens annähernd unverändert bleibt und dass nach einer Abkühlung des Werkzeugs dieses einem gleichmässigen Abtragungsvorgang ausgesetzt wird, welcher die drei Zonen (Z1 bis Z3) entsprechend dem Härteprofil in ihrer Höhe einstellt und die Übergänge zwischen den Zonen (Z1 bis Z3) und der Werkzeugoberfläche (1') glättet.

2. Verfahren nach Anspruch 1, **dadurch gekennzeichnet, dass** zum thermischen Aufschmelzen der Werkzeugoberfläche ein gepulster Nd:YAG-Laser eingesetzt wird.

3. Verfahren nach Anspruch 1 oder 2, **dadurch gekennzeichnet, dass** die Zonen (Z1 bis Z3) durch eine Strahlbearbeitung eingestellt werden.

4. Verfahren nach Anspruch 3, **dadurch gekennzeichnet, dass** die Strahlbearbeitung mechanisch, insbesondere durch Sandstrahlen, Stahlkiesstrahlen oder Kugelstrahlen vorgenommen wird.

5. Verfahren nach Anspruch 1 oder 2, **dadurch gekennzeichnet, dass** die Zonen (Z1 bis Z3) durch eine chemische Behandlung, insbesondere durch Ätzen eingestellt werden.

6. Schmiertaschen in Werkstückoberflächen welche durch Abprägen mit einem nach den Ansprüchen 1 bis 5 hergestellten Werkzeug erzeugt sind, **dadurch gekennzeichnet, dass** diese einen aus der Werkstückoberfläche (1') herausragenden, bogenförmig umlaufenden Randabschluss (9) aufweisen, dass innerhalb des Randabschlusses (9) eine kraterförmige Vertiefung (2) vorgesehenen ist, und dass die Schmiertaschen in einer der lokalen Belastung des Werkstücks (1) angepassten Raster in definierten geometrischen Abständen der einzelnen Raster zueinander, auf der Werkstückoberfläche (1') und/oder entsprechend einer vorgegebenen Textur verteilt sind.

7. Schmiertaschen nach Anspruch 6, **dadurch gekennzeichnet, dass** diese abgerundet und geglättet sind und dass ein zwischen der Werkzeugoberfläche (HE) und dem Innern des Randabschlusses (9) gebildeter Tangentialwinkel (β) im Bereich zwischen 5° und 15° vorgesehen ist.

8. Schmiertaschen nach Anspruch 6 oder 7, **dadurch gekennzeichnet, dass** der äussere Durchmesser (dₐ) des Randabschlusses (9) < 500 µm und > 150 µm ist, dass die maximale Vertiefung (t_{K}) > 2 µm und < 20 µm ist und dass die Überhöhung (hₛ) des Randabschlusses (9) gegenüber der Werkstückoberfläche (HE) < 5 µm und > 1 µm ist.

9. Schmiertaschen nach Anspruch 8, **dadurch gekennzeichnet, dass** der Tangentialwinkel (β) nach dem in der Vertiefung (2) aufzunehmenden Schmiermittel bzw. nach dessen Viskosität bei Arbeitstemperatur gewählt ist.

10. Anwendung des Verfahrens nach Anspruch 1, zur Erzeugung von Schmiertaschen bildenden Prägewalzen zum Feinwalzen und Texturieren von Blech.
